# EUROPÄISCHE PATENTSCHRIFT

(11) **EP 2 626 185 B1**
(45) Veröffentlichungstag und Bekanntmachung des Hinweises auf die Patenterteilung: **15.07.2020**
(21) Anmeldenummer: 13151454.9
(22) Anmeldetag: 16.01.2013
(51) Int. Cl.: B29C 45/14

(54) **Verfahren zum Herstellen eines spritzgegossener Kunststoffartikels**
Method for manufacturing an injection moulded plastic item
Procédé de fabrication d'un article en plastique moulé par injection

(30) Priorität: 08.02.2012 DE 102012201875
(43) Veröffentlichungstag der Anmeldung: 14.08.2013
(73) Patentinhaber: Rotho Kunststoff AG, 5303 Würenlingen (CH)
(72) Erfinder: Henning, Ingomar, 5417 Untersiggenthal (CH); Thoma, Christian, 79774 Albbruck (DE)
(74) Vertreter: Lemcke, Brommer & Partner Patentanwälte Partnerschaft mbB

(56) Entgegenhaltungen:
- DE-A1- 10 112 937
- DE-A1- 10 135 816
- DE-B3-102008 031 814
- FR-A1- 2 704 961
- JP-A- 2001 328 138
- JP-A- 2007 144 985
- JP-B2- 3 369 358
- US-A- 5 509 990
- US-A1- 2003 124 952
- US-A1- 2004 209 032
- US-A1- 2010 089 527
- US-B2- 7 290 639

## Beschreibung

Die Erfindung betrifft ein Verfahren zum Herstellen eines Kunststoffartikels nach dem Oberbegriff des Anspruchs 1. Ein Kunststoffartikel der vorliegenden Art wird dementsprechend durch Spritzgießen hergestellt. Beim entsprechenden Verfahren wird ein Spritzgießwerkzeug mit einer ersten Werkzeughälfte und einer zweiten Werkzeughälfte verwendet, die zum Öffnen und Schließen des Spritzgießwerkzeugs auseinandergefahren und zusammengefahren werden können. Zwischen sich bilden die beiden Werkzeughälften des Spritzgießwerkzeugs eine Kavität. In diese Kavität wird bei geschlossenem Spritzgießwerkzeug eine Kunststoffschmelze eingespritzt, wo sie zu einem Kunststoffartikel erstarrt. Durch Öffnen des Spritzgießwerkzeugs wird der Kunststoffartikel entformt.

Spritzgegossene Kunststoffgegenstände werden seit vielen Jahren für die unterschiedlichsten Gebrauchszwecke hergestellt. Zum Teil ersetzt der Kunststoff hierbei herkömmliche, teure oder schwer zu verarbeitende Materialien, wie Holz oder Metall, zum Teil sind jedoch auch Gegenstände entstanden, deren Gebrauchseigenschaften nur durch das Material Kunststoff erzielt werden können. In beiden Fällen ist es oft wünschenswert oder sogar unverzichtbar, auf das Kunststoffmaterial eine Dekorfolie aufzubringen, um dem Kunststoffgegenstand ein gewünschtes Aussehen zu geben. Dies ist beispielsweise bei Kunststoffartikeln der Fall, die Holzgegenstände ersetzen sollen, denn diese müssen mit einer Dekorfolie versehen werden, die den optischen Eindruck eines Holzdekors hervorruft. Aber auch Kunststoffartikel, die als solche im Gebrauch sind, wie beispielsweise Lebensmittel-Transportbehältnisse für den Alltagsgebrauch in Schule und Beruf, können aus Designgründen mit Dekorfolien versehen werden. Das nachträgliche Aufkleben von Dekorfolien auf Kunststoffgegenstände ist zwar durchaus gängige Praxis, führt jedoch nicht zu hochwertigen Ergebnissen, weder hinsichtlich der optischen und haptischen Anmutung, noch hinsichtlich ihrer Haltbarkeit und Belastbarkeit. Es ist daher bekannt, eine Dekorfolie noch vor der Herstellung eines Kunststoffartikels in das zu seiner Herstellung verwendete Spritzgießwerkzeug einzulegen und den Kunststoffgegenstand direkt im Spritzgießwerkzeug an die Dekorfolie anzuspritzen. Beim Erkalten des in das Spritzgießwerkzeug eingespritzten flüssigen Kunststoffs verbindet sich dieser dauerhaft mit der im Spritzgießwerkzeug befindlichen Folie. Die Dekorfolie ist so im sogenannten In-Mold-Labeling-Verfahren Teil des Kunststoffartikels geworden.

Aus der DE-A-2 346 296 ist ein Verfahren der eingangs genannten Art sowie ein entsprechender Kunststoffartikel bekannt, wobei hier ein Gehäuse für einen Lautsprecher, einen Rundfunkempfänger und dergleichen hergestellt und an seinen Außenflächen mit einer Dekorfolie versehen wird, die mit einem Holzdekor bedruckt ist und dem Kunststoffartikel die optische Anmutung eines Gehäuses aus Holz gibt. Die Folie mit dem Holzdekor wird in das Spritzgießwerkzeug eingelegt und das Spritzgießwerkzeug geschlossen. Dann wird flüssiger Kunststoff in das Spritzgießwerkzeug eingespritzt, und zwar derart, dass sich die Dekorfolie mit dem im Spritzgießwerkzeug erstarrenden Kunststoff verbindet. Eine spezielle Formung der Wandkavitäten im Spritzgießwerkzeug führt die Fließrichtung des flüssigen Kunststoffs so, dass er die im Spritzgießwerkzeug eingelegte Dekorfolie nicht hinterströmen kann. Nach dem Öffnen des Spritzgießwerkzeugs und dem Auswerfen des Kunststoffartikels bildet die Dekorfolie dann die äußere Oberfläche desselben.

Das Einlegen einer Dekorfolie in das Spritzgießwerkzeug ist nicht unproblematisch, da die Dekorfolie an einer Wandung der Kavität anliegen muss, beim Schließen des Spritzgießwerkzeugs an Ort und Stelle verbleiben soll und beim Einspritzen der Kunststoffschmelze von dieser nicht hinterströmt werden darf. Denn nur so ist gewährleistet, dass die Dekorfolie nach dem Entformen des Kunststoffartikels tatsächlich einen Teil der Oberfläche bildet und nicht in der Schmelze "verschwindet".

Bei der JP 3 369358 B2 werden als flächiges Dekormaterial, das einen Teil der Oberfläche des entformten Kunststoffartikels bilden soll, speziell angefertigte Dekorfolien verwendet, die ihrerseits in der Regel aus Kunststoff bestehen. Diese Dekorfolien sind luftundurchlässig und können somit mittels Ansaugöffnungen und entsprechender Vakuumeinrichtungen an der Wandung der Kavität des Spritzgießwerkzeugs bis zum Einspritzen der Kunststoffschmelze an Ort und Stelle gehalten werden. Alternativ ist es auch bekannt, herkömmliche Kunststoff-Dekorfolien zu ionisieren, so dass sie elektrostatisch an der Wandung der Kavität des Spritzgießwerkzeugs haften, bis die Kunststoffschmelze eingespritzt wird.

Im herkömmlichen In-Mold-Labeling-Verfahren werden als Dekormaterialien nicht nur deswegen Kunststofffolien verwendet, weil diese sowohl durch Ansaugen als auch durch Ionisieren in der Kavität des Spritzgießwerkzeugs ortsfest gehalten werden können, sondern naheliegenderweise auch deswegen, weil die Dekorfolie zumindest einen Teil der Oberfläche des damit versehenen, angespritzten Kunststoffartikels bildet. Besteht die Dekorfolie selbst aus einem vergleichbaren Kunststoff, genügen seine Oberflächeneigenschaften in etwa den Anforderungen, denen auch der Kunststoffartikel selbst entspricht. Dies ist jedenfalls dann vorteilhaft und folgerichtig, wenn die Dekorfolie die Oberfläche des Kunststoffartikels in ihren Eigenschaften nicht oder nur unwesentlich verändern und in der Hauptsache dazu dienen soll, den optischen Eindruck des Kunststoffartikels zu verbessern.

Nun gibt es jedoch das Bedürfnis, Kunststoffartikel mit Oberflächen zu versehen, die gerade nicht die haptischen Eigenschaften einer Kunststoffoberfläche besitzen; denn eine Kunststoffoberfläche wird bei Gebrauchsgegenständen, bei denen es nicht auf die vorteilhaften Eigenschaften einer Kunststoffoberfläche ankommt, oft als eher minderwertig empfunden. Dies ist insbesondere dann der Fall, wenn die Dekorfolie, die im In-Mold-Labeling-Verfahren aufgebracht wurde und einen Teil der Oberfläche des Kunststoffartikels bildet, die Optik eines vom Kunststoff verschiedenen Materials nachbildet, beispielsweise eine Holzoberfläche, eine Lederoberfläche oder eine Textiloberfläche. Denn wenn die Kunststoffoberfläche rein optisch nicht als solche erscheint, haptisch jedoch unmittelbar als solche identifiziert werden kann, ergibt sich unweigerlich ein eher minderwertiger Eindruck.

Kunststoffartikel, die im Spritzgießverfahren hergestellt werden, können daher eine deutlich höhere Qualitätsanmutung erhalten, wenn ihre Oberfläche zumindest teilweise durch Dekormaterialien gebildet wird, die nicht aus Kunststoff bestehen, aber dennoch im In-Mold-Labeling-Verfahren untrennbar mit dem Kunststoff des Kunststoffartikels verbunden worden sind und somit mit diesem eine Einheit bilden.

Viele der hierfür erwünschten Dekormaterialien, wie insbesondere Textilien und Dekormaterialien auf Zellulosebasis, können allerdings nicht ionisiert werden, und sie sind luftdurchlässig oder haben eine unebene Oberfläche. Das für das In-Mold-Labeling-Verfahren notwendige Fixieren des Dekormaterials an einer die Kavität des Spritzgießwerkzeugs bildenden Werkzeughälfte kann mit solchen Materialien daher nicht mit herkömmlichen Vakuumeinrichtungen oder elektrostatisch erfolgen. Wird das Dekormaterial jedoch nicht zuverlässig an einer Werkzeughälfte fixiert, kann es beim Schließen des Spritzgießwerkzeugs verrutschen oder von der in die Kavität eingespritzten Kunststoffschmelze hinterströmt werden. Beides führt zu schlechten Arbeitsergebnissen bzw. zur Produktion von Ausschluss.

Ausgehend von diesem Stand der Technik liegt der vorliegenden Erfindung die Aufgabe zugrunde, ein verbessertes Verfahren zum Herstellen eines Kunststoffartikels durch Spritzgießen vorzuschlagen, mit dem der Kunststoffartikel im In-Mold-Labeling-Verfahren auch mit Dekormaterialien versehen werden kann, die nicht per Vakuum oder Ionisierung in der Kavität des Spritzgießwerkzeugs fixiert werden können, und/oder ein solches Verfahren mit geringerem Aufwand für die Fixierung des Dekormaterials in der Kavität des Spritzgießwerkzeugs auszugestalten.

Gelöst ist diese Aufgabe durch ein Verfahren mit den Merkmalen des Anspruchs 1. Bevorzugte Ausgestaltungen und Weiterbildungen des erfindungsgemäßen Verfahrens finden sich in den Ansprüchen 2 bis 7.

Bei dem erfindungsgemäßen Verfahren wird das flächige Dekormaterial, an das die Kunststoffschmelze angespritzt werden soll, punktuell, bereichsweise oder ganzflächig mit einem Adhäsivstoff versehen und mittels des Adhäsivstoffs an einer die Kavität bildenden Werkzeughälfte des geöffneten Spritzgießwerkzeugs fixiert.

Das Aufbringen des Adhäsivstoffs kann außerhalb des Spritzgießwerkzeugs erfolgen, so dass sich aufwändige Einrichtungen am Spritzgießwerkzeug selbst erübrigen. Ferner können auch flächige Dekormaterialien verwendet werden, die weder ionisierbar noch ansaugbar sind. Mit der vorliegenden Erfindung müssen solche Materialien auch nicht mit umständlichen mechanischen Befestigungselementen geklemmt oder in diese eingespannt werden. Es reicht, den Adhäsivstoff aufzubringen und mit dessen Hilfe dann das flächige Dekormaterial an einer Wandung der Kavität zu fixieren.

Da das flächige Dekormaterial so in die Kavität des Spritzgießwerkzeugs eingelegt werden muss, dass die Kunststoffschmelze nur an die Rückseite bzw. Nicht-Sichtseite des Dekormaterials gelangt, ist es alternativ bei einem erläuternden Beispiel im Rahmen der vorliegenden Beschreibung ebenfalls sinnvoll, das flächige Dekormaterial an der zweiten Werkzeughälfte des Spritzgießwerkzeugs zu fixieren und die Kunststoffschmelze so, vorzugsweise von der ersten Werkzeughälfte her, in die Kavität einzuspritzen, dass das flächige Dekormaterial gegen die zweiten Werkzeughälfte gedrückt wird. Somit kann die Kunststoffschmelze nicht hinter das Dekormaterial bzw. zwischen das Dekormaterial und die Werkzeughälfte fließen. Die Vorderseite bzw. Sichtseite des Dekormaterials, die mittels des erfindungsgemäßen Adhäsivstoffs an der Werkzeughälfte anliegt, bleibt von der Kunststoffschmelze unberührt und bildet daher am fertigen Kunststoffartikel wie beabsichtigt einen Teil von dessen Oberfläche.

Bei einer Weiterbildung ist es im Rahmen der vorliegenden Erfindung bevorzugt, einen Adhäsivstoff zu verwenden, der durch die Wärme, die beim Spritzgießen von der Kunststoffschmelze auf das flächige Dekormaterial übertragen wird, seine adhäsiven Eigenschaften verliert. Dies kann also ein Adhäsivstoff sein, der sich oberhalb einer bestimmten Temperatur zersetzt oder seine chemischen Eigenschaften verändert. Diese bestimmte Temperatur liegt zweckmäßigerweise deutlich unterhalb der Temperatur, mit der die Kunststoffschmelze in die Kavität des Spritzgießwerkzeugs eingespritzt wird.

Es ist jedoch auch vorstellbar, die vorliegende Erfindung mit einem Adhäsivstoff umzusetzen, der beispielsweise wasserlöslich ist und dementsprechend leicht vom fertigen Kunststoffartikel entfernt werden kann. Es kann auch ein Adhäsivstoff verwendet werden, der durch eine Flüssigkeit, ein Puder oder dergleichen neutralisiert werden kann.

Erfindungsgemäß ist es vorgesehen, die Rückseite des flächige Dekormaterials mit dem erfindungsgemäßen Adhäsivstoff an der ersten Werkzeughälfte des Spritzgießwerkzeugs zu fixieren und die Kunststoffschmelze so in die Kavität einzuspritzen, dass sie beim Einspritzen auf die Rückseite des flächigen Dekormaterials auftrifft, dieses hierdurch von der ersten Werkzeughälfte ablöst und gegen die zweite Werkzeughälfte drückt, so dass die Kunststoffschmelze nicht über die Sichtseite des flächigen Dekormaterials fließen kann.

Bei einem erläuternden Beispiel im Rahmen der vorliegenden Beschreibung kann dies alternativ ebenfalls solcherart erfolgen, dass die Kunststoffschmelze ebenfalls von der ersten Werkzeughälfte her in die Kavität eingespritzt wird. Erfindungsgemäß wird bei der Geometrie des Spritzgießwerkzeugs die Kunststoffschmelze aber von der zweiten Werkzeughälfte in die Kavität eingespritzt. Erfindungsgemäß liegt das flächige Dekormaterial nicht ganzflächig an der ersten Werkzeughälfte an, sondern weist einen Abschnitt auf, der in die Kavität hineinragt, und dessen Rückseite von der einströmenden Kunststoffschmelze getroffen wird.

Erfindungsgemäß wird das flächige Dekormaterial demnach mit seiner Rückseite, also der Nicht-Sichtseite, an einer Wandung der Kavität fixiert, so dass auch der Adhäsivstoff auf die Rückseite des Dekormaterials aufgetragen wird. Die Sichtseite des Dekormaterials, die später auch einen Teil der Oberfläche des fertigen Kunststoffartikels bildet, bleibt dementsprechend frei von Adhäsivstoff, so dass sich ein nachträglicher Reinigungs- oder Neutralisierungsschritt erübrigt, und zwar auch dann, wenn kein Adhäsivstoff verwendet wird, der sich durch die Wärme der Kunststoffschmelze zersetzt oder deaktiviert.

Vorteilhaft ist in diesem Zusammenhang, wenn ein Adhäsivstoff verwendet wird, der sich in der Kunststoffschmelze löst, so dass er die stoffschlüssige Verbindung zwischen der Kunststoffschmelze und dem flächigen Dekormaterial nicht beeinträchtigt.

Diese alternative Umsetzung des erfindungsgemäßen Verfahrens, bei dem die Rückseite des flächigen Dekormaterials an einer Wandung der Kavität fixiert wird, bietet besondere Vorteile, wenn diese Wandung die Kernseite des Spritzgießwerkzeugs ist. Denn so ist es besonders einfach, das flächige Dekormaterial durch Einspritzen der Kunststoffschmelze von der Kernseite abzulösen und gegen die Gesenkseite zu drücken, ohne befürchten zu müssen, dass Teile der Kunststoffschmelze das flächige Dekormaterial hinterströmen. Denn dies verhindert schon alleine die Geometrie der beteiligten Bauteile.

Der im Rahmen der vorliegenden Erfindung verwendete Adhäsivstoff kann fest oder pastös sein; es bietet jedoch besondere Vorteile, wenn ein flüssiger Adhäsivstoff verwendet wird, mit dem das flächige Dekormaterial durch Aufsprühen punktuell, bereichsweise oder ganzflächig benetzt wird. Das Aufsprühen eines flüssigen Adhäsivstoffs ermöglicht eine besonders genaue Dosierung und Verteilung desselben. Darüber hinaus ist es mit einem flüssigen Adhäsivstoff besonderes gut möglich, das Verfahren zu automatisieren, indem das flächige Dekormaterial von einem Manipulator bzw. Industrieroboter aus einem Magazin entnommen und einer Sprühdüse zugeführt wird, die das Dekormaterial mit dem flüssigen Adhäsivstoff benetzt. Derselbe Manipulator, beispielsweise ein Entnahmeroboter, oder ein zweiter Manipulator kann dann das mit dem flüssigen Adhäsivstoff benetzte Dekormaterial in das geöffnete Spritzgießwerkzeug einbringen und an einer der Werkzeughälften fixieren. Je nach dem, ob das Dekormaterial mit der Vorderseite oder der Rückseite in der Kavität des Spritzgießwerkzeugs fixiert werden soll, wird die Vorderseite oder die Rückseite des Dekormaterials mit dem flüssigen Adhäsivstoff besprüht.

Abhängig vom Dekormaterial ist es auch möglich, vorzugsweise dessen Rückseite mit dem flüssigen Adhäsivstoff zu benetzen, und zwar in einer Menge, die ein durchlässiges Dekormaterial, beispielsweise ein Textilstück, durchdringen kann, so dass die Adhäsivwirkung trotz Auftrags des Adhäsivstoffs auf der Rückseite des Dekormaterials auch auf der Vorderseite des Dekormaterials wirksam wird. Das Dekormaterial kann dann mit der Vorderseite in der Kavität fixiert werden.

Besonders bevorzugt werden im Rahmen der vorliegenden Erfindung Dekormaterialien verwendet, die aus textilen Materialien, Materialien auf Zellulosebasis und/oder Vinyl sowie Metallfolien bestehen. Textile Materialien, die beispielsweise aus einem Gewebe, Gestricke oder Gewirk oder auch aus einer Lederschicht bestehen, werden im Allgemeinen als besonders hochwertige Oberflächen empfunden, insbesondere wenn sie die Oberfläche eines Kunststoffartikels bilden oder einen Teil derselben bedecken.

Materialien auf Zellulosebasis können Papierbahnen sein, die gegebenenfalls mit Glasgeweben, sonstigen Fasern oder Textileinlagen verstärkt sind. Auch Vinyl, Metallfolien, Vlies oder Naturwerkstoffe wie Gras, Kork und dergleichen können mit Trägermaterialien auf Zellulosebasis kombiniert oder auf Kunststoffträgerfolien verarbeitet sein, um flächige Dekormaterialien zu bilden. Insbesondere auf Zellulosebasis hergestellten Bahnen sind in aller Regel mechanisch höchst widerstandsfähig sowie bereits in einer unübersehbaren Vielzahl von Dekoren und Farbgebungen frei im Markt erhältlich.

Ein Ausführungsbeispiel für die vorliegende Erfindung wird im Folgenden anhand der beigefügten Zeichnungen näher beschrieben und erläutert. Es zeigen:
- Figur 1: eine schematische Draufsicht auf eine Vorrichtung zur Durchführung eines erfindungsgemäß ausgestalteten Verfahrens;
- Figur 2: eine schematische Darstellung eines Spritzgießwerkzeugs, in dem ein erfindungsgemäß ausgestaltetes Verfahren durchgeführt wird.

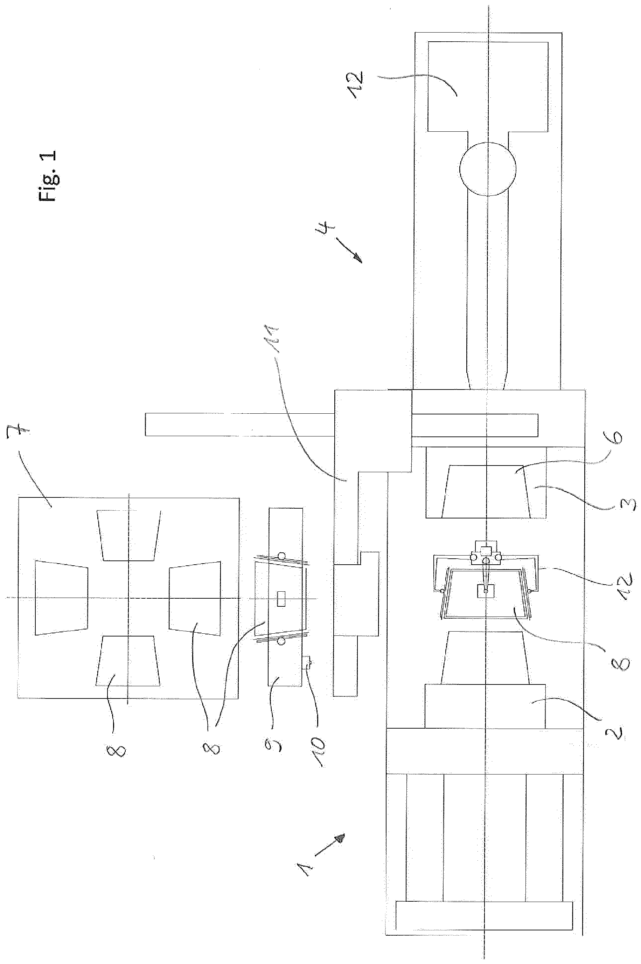

Figur 1 zeigt eine schematische Draufsicht auf eine Vorrichtung, mit der ein erfindungsgemäß ausgestaltetes Verfahren durchgeführt werden kann. Diese Vorrichtung besteht aus einer Spritzgießmaschine mit einer Schließseite 1 und einer Spritzseite 4, die eine erste Werkzeughälfte 2, die hier die Kernseite ist, und eine zweite Werkzeughälfte 3, die hier durch die Gesenkseite gebildet wird, tragen. Die Spritzseite 4 umfasst ein Einspritzaggregat 12. Mit dem Einspritzaggregat 12 kann eine Kunststoffschmelze in eine zwischen der Kernseite 2 und der Gesenkseite 3 des Spritzgießwerkzeugs gebildete Kavität 6 eingespritzt werden. Die beiden Werkzeughälften 2, 3 können (wie dargestellt) auseinandergefahren werden, um das Spritzgießwerkzeug zu öffnen, oder aber zusammengefahren werden, um das Spritzgießwerkzeug zu schließen.

Ein neben der Spritzgießmaschine angeordnetes Magazin 7 enthält vier Stapel aus flächigem Dekormaterial 8, das mit der Sichtseite nach unten aufgestapelt liegt. Dieses flächige Dekormaterial 8 besteht aus textilverstärkten Papierstücken. Zwischen dem Magazin 7 und der Spritzgießmaschine ist eine Übergabestation 9 angeordnet, die mit einem beweglichen Sprühkopf 10 zum Aufsprühen von flüssigem Adhäsivstoff versehen ist. Ein hier lediglich schematisch angedeuteter Industrieroboter 11, der mit einem (nicht dargestellten) Entnahmegreifer zum Ergreifen des Dekormaterials 8 und einem Einlegegreifer 12 versehen ist, ist zwischen dem Magazin 7 und dem Spritzgießwerkzeug beweglich angeordnet.

Der Industrieroboter 11 greift im Magazin 7 jeweils vier Dekormaterial-Blätter 8, trägt sie zur Übergabestation 9, und legt sie dort ab, wobei die vier Dekormaterial-Blätter 8 in Positionen zueinander angeordnet und in diesen Positionen genau ausgerichtet werden, die den Seitenwänden des herzustellenden (nicht dargestellten) Kunststoffartikels entsprechen, so dass eine Trogform entsteht. In der Übergabestation werden die Rückseiten der Dekormaterial-Blätter 8 mittels des Sprühkopfs 10 mit flüssigem Adhäsivstoff benetzt. Der Industrieroboter 11 transportiert die benetzten Dekormaterial-Blätter 8 dann mit Hilfe seines Einlegegreifers 12, der die Sichtseiten der Blätter 8 greift, in das geöffnete Spritzgießwerkzeug, um sie dort mit ihrer Rückseite an der ersten Werkzeughälfte 2, also der Kernseite zu fixieren. Die Vorderseite der flächigen Dekormaterialien 8, also deren Sichtseite, zeigt somit von der Kernseite 2 des Spritzgießwerkzeugs weg und zur Kavität 6 hin. Nach dem Schließen der Spritzgießmaschine wird heiße Kunststoffschmelze 5 über die Gesenkseite 3 in die Kavität 6 eingespritzt, wodurch das flächige Dekormaterial 8 von der Kernseite 2 abgelöst und gegen die zweite Werkzeughälfte 3, also das Gesenk gedrückt wird.

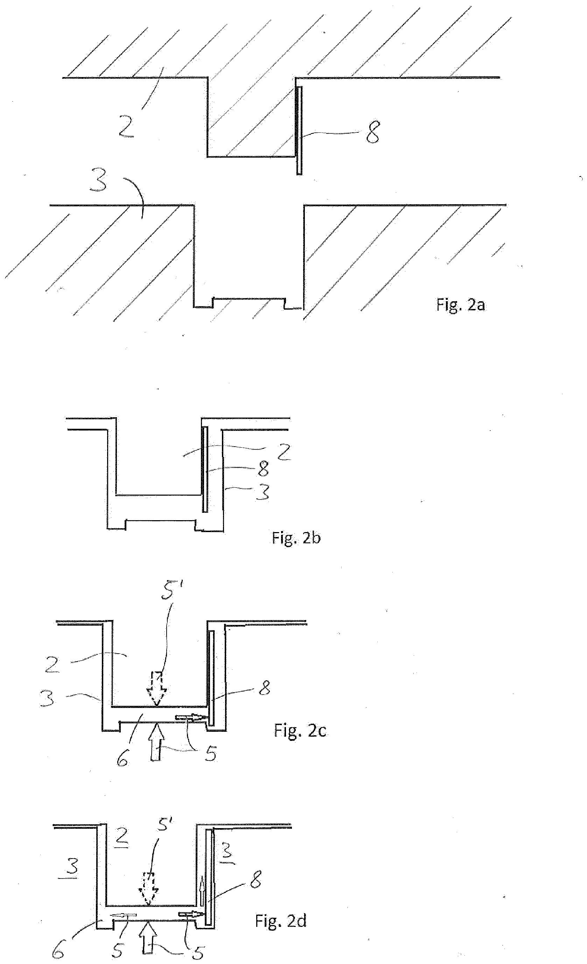

Dieser Vorgang wird anhand der Figuren 2a bis 2b deutlicher dargestellt: Figur 2a zeigt schematisch die Kernseite 2 und die Gesenkseite 3 des Spritzgießwerkzeugs, wobei ein flächiges Dekormaterial 8 mittels eines Adhäsivstoffs an der Kernseite 2 des Spitzgießwerkzeugs fixiert ist. Hierbei liegt ein Großteil der Rückseite, also der Nicht-Sichtseite des Dekormaterials 8 an der Kernseite 2 an.

Danach wird das Spritzgießwerkzeug geschlossen (Figur 2b) und Kunststoffschmelze 5 von der Gesenkseite 3 her in eine durch die beiden Werkzeughälften 2 und 3 gebildete Kavität 6 eingespritzt (Figur 2c). Die Kunststoffschmelze 5 trifft auf den freien Bereich der Rückseite des Dekormaterials 8 auf, löst hierbei das flächige Dekormaterial 8 von der Kernseite 2 des Spritzgießwerkzeugs ab und drückt dieses gegen die Gesenkseite 3 (Figur 2d), so dass nun dessen Sichtseite an der Gesenkseite 3 anliegt und nicht von der Kunststoffschmelze 5 hinterströmt wird. Der Adhäsivstoff, mit dem das Dekormaterial 8 an der ersten Werkzeughälfte 2 des geöffneten Spritzgießwerkzeugs (Figur 2a) fixiert worden ist, befindet sich im Endzustand (Figur 2d) somit innerhalb der Kunststoffschmelze 5.

Wie in den Figuren 2c und 2d angedeutet, kann die Kunststoffschmelze 5' auch von der Kernseite 2 her in die Kavität 6 eingespritzt werden, ohne am erfindungsgemäßen Effekt etwas zu ändern. Soweit das flächige Dekormaterial 8 allerdings den Anspritzpunkt, an dem die Kunststoffschmelze 5, 5' eingespritzt wird, überdeckt, muss die Kunststoffschmelze 5' durch die Kernseite 2 eingespritzt werden, damit sich das Dekormaterial 8 von der Kernseite 2 löst und mit seiner Sichtseite gegen die Gesenkseite 3 des Spritzgießwerkzeugs gedrückt wird.

## Patentansprüche

1. Verfahren zum Herstellen eines Kunststoffartikels durch Spritzgießen, unter Verwendung eines Spritzgießwerkzeugs mit einer ersten Werkzeughälfte (2) und einer zweiten Werkzeughälfte (3), die zwischen sich eine Kavität (6) bilden und zum Öffnen und Schließen des Spritzgießwerkzeugs auseinandergefahren und zusammengefahren werden können, wobei eine Kunststoffschmelze (5) in die Kavität (6) des geschlossenen Spritzgießwerkzeugs eingespritzt wird, dort erstarrt und der hierdurch entstandene Kunststoffartikel durch Öffnen des Spritzgießwerkzeugs entformt wird,
wobei vor dem Einspritzen der Kunststoffschmelze (5) in das Spritzgießwerkzeug ein flächiges Dekormaterial (8) mit einer Rückseite und einer Sichtseite solcherart an einer die Kavität (6) bildenden Werkzeughälften (2, 3) des geöffneten Spritzgießwerkzeugs angebracht wird, dass es sich, nach dem Schließen des Spritzgießwerkzeugs, beim Einspritzen der Kunststoffschmelze (5) und/oder beim Erstarren der Kunststoffschmelze (5) an seiner Rückseite stoffschlüssig mit dem Kunststoff verbindet um danach mit seiner Sichtseite zumindest einen Teil einer Oberfläche des Kunststoffartikels zu bilden,
wobei das flächige Dekormaterial (8) punktuell, bereichsweise oder ganzflächig mit einem Adhäsivstoff versehen wird und mittels des Adhäsivstoffs an einer die Kavität (6) bildenden Werkzeughälfte (2, 3) des geöffneten Spritzgießwerkzeugs fixiert wird und
das flächige Dekormaterial (8) mit seiner Rückseite an der ersten Werkzeughälfte (2) des Spritzgießwerkzeugs fixiert wird, wobei das Dekormaterial (8) nicht ganzflächig an der ersten Werkzeughälfte (2) anliegt;
**dadurch gekennzeichnet,**
**dass** das Dekormaterial (8) zumindest einen Abschnitt aufweist, der in die Kavität hineinragt und die Kunststoffschmelze (5) von der zweiten Werkzeughälfte (3) so in die Kavität (6) eingespritzt wird, dass die Kunststoffschmelze (5) auf den zumindest einen Abschnitt der Rückseite des flächigen Dekormaterials (8) auftrifft, dieses von der ersten Werkzeughälfte (2) ablöst und gegen die zweite Werkzeughälfte (3) drückt.

2. Verfahren nach Anspruch 1,
**dadurch gekennzeichnet,**
**dass** ein Adhäsivstoff verwendet wird, der sich in der Kunststoffschmelze (5) löst.

3. Verfahren nach einem der Ansprüche 1 oder 2, **dadurch gekennzeichnet,**
**dass** die erste Werkzeughälfte (2), an der das flächige Dekormaterial (8) fixiert wird, die Kernseite des Spritzgießwerkzeugs ist.

4. Verfahren nach einem der Ansprüche 1 bis 3,
**dadurch gekennzeichnet,**
**dass** ein Adhäsivstoff verwendet wird, der durch die Wärme, die von der Kunststoffschmelze (5) auf das flächige Dekormaterial (8) übertragen wird, seine adhäsiven Eigenschaften verliert.

5. Verfahren nach mindestens einem der Ansprüche 1 bis 4,
**dadurch gekennzeichnet,**
**dass** ein flüssiger Adhäsivstoff verwendet und das flächige Dekormaterial (8) durch Aufsprühen des Adhäsivstoffs punktuell, bereichsweise oder ganzflächig mit dem Adhäsivstoff benetzt wird.

6. Verfahren nach Anspruch 5,
**dadurch gekennzeichnet,**
**dass** das flächige Dekormaterial (8) von mindestens einem Manipulator (11) aus einem Magazin (7) entnommen, mittels einer Sprühdüse (10) mit dem flüssigen Adhäsivstoff benetzt und an einer der Werkzeughälften (2, 3) fixiert wird.

7. Verfahren nach mindestens einem der Ansprüche 1 bis 6,
**dadurch gekennzeichnet,**
**dass** als flächiges Dekormaterial (8) im Wesentlichen ein textiles Material, ein Material auf Zellulosebasis und/oder Vinyl verwendet wird.

## Claims

1. Method for producing a plastics article by injection moulding, using an injection-moulding tool having a first mould half (2) and a second mould half (3) which between them form a cavity (6) and can be moved apart and moved together to open and close the injection-moulding tool, wherein a molten plastics material (5) is injected into the cavity (6) of the closed injection-moulding tool and solidifies therein and the plastics article thereby formed is demoulded by opening of the injection-moulding tool,
wherein before the molten plastics material (5) is injected into the injection-moulding tool, a planar decorative material (8) having a rear side and a visible side is attached to one of the mould halves (2, 3) of the opened injection-moulding tool that form the cavity (6) in such a way that, after the injection-moulding tool has been closed, on injection of the molten plastics material (5) and/or on solidification of the molten plastics material (5) the decorative material bonds on its rear side to the plastics material in order that its visible side then forms at least part of a surface of the plastics article,
wherein the planar decorative material (8) is at certain points, in certain regions or over the entire surface provided with an adhesive and is fixed by means of the adhesive to one of the mould halves (2, 3) of the opened injection-moulding tool that form the cavity (6) and the planar decorative material (8) is fixed by its rear side to the first mould half (2) of the injection-moulding tool, the decorative material (8) not having its entire surface in contact with the first mould half (2);
**characterised in that**
the decorative material (8) has at least one portion which projects into the cavity, and the molten plastics material (5) is injected from the second mould half (3) into the cavity (6) so that the molten plastics material (5) strikes the at least one portion of the rear side of the planar decorative material (8), detaches the latter from the first mould half (2) and presses it against the second mould half (3).

2. Method according to claim 1,
**characterised in that**
an adhesive is used which dissolves in the molten plastics material (5).

3. Method according to either one of claims 1 and 2, **characterised in that**
the first mould half (2), to which the planar decorative material (8) is fixed, is the core side of the injection-moulding tool.

4. Method according to any one of claims 1 to 3,
**characterised in that**
an adhesive is used which loses its adhesive properties as a result of the heat transmitted from the molten plastics material (5) to the planar decorative material (8).

5. Method according to at least one of claims 1 to 4,
**characterised in that**
a liquid adhesive is used and the planar decorative material (8) is at certain points, in certain regions or over the entire surface wetted with the adhesive by spray application of the adhesive.

6. Method according to claim 5,
**characterised in that**
the planar decorative material (8) is removed from a magazine (7) by at least one manipulator (11), wetted with the liquid adhesive by means of a spray nozzle (10) and fixed to one of the mould halves (2, 3).

7. Method according to at least one of claims 1 to 6,
**characterised in that**
as planar decorative material (8) there is used essentially a textile material, a cellulose-based material and/or vinyl.

## Revendications

1. Procédé de fabrication d'un article en plastique par moulage par injection, en utilisant un outil de moulage par injection avec une première moitié d'outil (2) et une deuxième moitié d'outil (3), qui forment entre elles une cavité (6) et qui peuvent être éloignées l'une de l'autre et rapprochées l'une de l'autre en vue de l'ouverture et de la fermeture de l'outil de moulage par injection, dans lequel une masse de plastique fondue (5) est injectée dans la cavité (6) de l'outil de moulage par injection fermé et est solidifiée là et l'article en plastique ainsi créé est démoulé par l'ouverture de l'outil de moulage par injection,
dans lequel, avant l'injection de la masse de plastique fondue (5) dans l'outil de moulage par injection, un matériel de décoration plat (8) avec une face arrière et une face visible est placé de telle manière au niveau d'une des moitiés d'outil (2, 3), formant la cavité (6), de l'outil de moulage par injection ouvert que, après la fermeture de l'outil de moulage par injection, lors de l'injection de la masse de plastique fondue (5) et/ou lors de la solidification de la masse de plastique fondue (5), il se lie au plastique par liaison de matière au niveau de sa face arrière afin de former ensuite avec sa face visible au moins une partie de la surface de l'article en plastique,
dans lequel le matériel de décoration plat (8) est muni ponctuellement, par zones ou sur toute sa surface, d'une substance adhésive et, au moyen de la substance adhésive, il est fixé à une moitié d'outil (2, 3), formant la cavité (6), de l'outil de moulage par injection ouvert et
le matériel de décoration plat (8) est fixé avec sa face arrière à la première moitié d'outil (2) de l'outil de moulage par injection, dans lequel le matériel de décoration (8) ne s'appuie pas par toute sa surface à la première moitié d'outil (2) ;
**caractérisé en ce**
**que** le matériel de décoration (8) présente au moins une partie qui dépasse dans la cavité et la masse de plastique fondue (5) est injectée par la deuxième moitié d'outil (3) de telle manière dans la cavité (6) que la masse de plastique fondue (5) arrive sur l'au moins une partie de la face arrière du matériel de décoration plat (8), détache celui-ci de la première moitié d'outil (2) et le pousse contre la deuxième moitié d'outil (3).

2. Procédé selon la revendication 1,
**caractérisé en ce**
**qu'**est utilisée une substance adhésive qui se dissout dans la masse de plastique fondue (5).

3. Procédé selon l'une quelconque des revendications 1 ou 2, **caractérisé en ce que** la première moitié d'outil (2), à laquelle le matériel de décoration plat (8) est fixé, est le côté noyau de l'outil de moulage par injection.

4. Procédé selon l'une quelconque des revendications 1 à 3,
**caractérisé en ce**
**qu'**est utilisée une substance adhésive qui perd ses propriétés adhésives par la chaleur qui est transférée par la masse de plastique fondue (5) sur le matériel de décoration plat (8).

5. Procédé selon l'une quelconque des revendications 1 à 4,
**caractérisé en ce**
**qu'**est utilisée une substance adhésive liquide et **en ce que**, par aspersion de la substance adhésive, le matériel de décoration plat (8) est mouillé avec la substance adhésive ponctuellement, par zones ou sur toute sa surface.

6. Procédé selon la revendication 5,
**caractérisé en ce**
**que** le matériel de décoration plat (8) est pris par au moins un manipulateur (11) dans un magasin (7), est mouillé au moyen d'une buse d'aspersion (10) avec la substance adhésive liquide et est fixé à l'une des moitiés d'outil (2, 3).

7. Procédé selon au moins l'une quelconque des revendications 1 à 6,
**caractérisé en ce**
**que** sont utilisés comme matériel de décoration plat (8) globalement un matériau textile, un matériau à base de cellulose et/ou de vinyle.
